# EUROPÄISCHE PATENTSCHRIFT

(11) **EP 2 746 618 B1**
(45) Veröffentlichungstag und Bekanntmachung des Hinweises auf die Patenterteilung: **17.08.2016**
(21) Anmeldenummer: 13004452.2
(22) Anmeldetag: 12.09.2013
(51) Int. Cl.: F16H 7/12

(54) **Spannvorrichtung für ein Umschlingungsmittel eines Umschlingungstriebs, insbesondere für einen Riemen eines Riemenantriebs an Brennkraftmaschinen**
Clamping device for a linking element of a belt drive, in particular for the belt of a belt drive on internal combustion engines
Dispositif de serrage pour un moyen de cerclage d'une commande de cerclage, notamment pour une courroie d'un entraînement à courroie sur des moteurs à combustion interne

(30) Priorität: 21.12.2012 DE 102012025155
(43) Veröffentlichungstag der Anmeldung: 25.06.2014
(73) Patentinhaber: MAN Truck & Bus AG, 80995 München (DE)
(72) Erfinder: Böhm, Martin, 90559 Burgthann (DE)

(56) Entgegenhaltungen:
- EP-A2- 0 826 906
- WO-A1-83/02308
- DE-A1- 19 634 344
- DE-U1-202010 014 188
- US-A- 5 064 405

## Beschreibung

Die vorliegende Erfindung betrifft eine Spannvorrichtung für ein Umschlingungsmittel eines Umschlingungstriebs, insbesondere für einen Riemen eines Riementriebs an Brennkraftmaschinen, gemäß dem Oberbegriff des Patentanspruchs 1.

Bei Spannvorrichtungen der gattungsgemäßen Art zum Beispiel für einen Kettentrieb oder insbesondere einem Riementrieb werden Spannrollen verwendet, die auf einer Spannplatte gelagert über einen Drehpunkt (bei exzentrischer Lagerung) oder über einen Schwenkpunkt verstellt werden. Bekannt sind auch Spannvorrichtungen (zum Beispiel EP 1 317 635 B1), bei denen der Spannhebel mit der Spannrolle von einer Montageposition in eine stabile Spannposition verschwenkbar ist, in der der wirksame Kraftvektor des Umschlingungsmittels bzw. des Riemens in einer Art Übertotpunktfunktion den Spannhebel gegen einen festen Anschlag vorspannt. Über Befestigungsmittel kann dann der Spannhebel festgelegt werden. Der Vorteil solcher Spannvorrichtungen liegt neben der Montagevereinfachung insbesondere in einer konstruktiv fest vorgegebenen Vorspannung des Riementriebs, ohne weitere Einstellvorgänge.

WO 83/02308 A1 lehrt einen Spannmechanismus zur Aufrechterhaltung der Spannung eines Antriebsriemens in einem Riemenanstriebssystem. Das Riemenantriebssystem weist einen Schwenkarm, eine um eine Drehachse drehbar am Schwenkarm befestigte Spannrolle, eine schwenkeinstellbare Befestigungsplatte und Elemente zur schwenkbaren Befestgiung des Armes an der Befestigungsplatte exzentrisch gegenüber der Schwenkachse der Befestigungsplatte auf. Über elastische Elemente, die betriebsmäßig den Befestigungselementen zugeordnet sind, wird um die Spannrolle in spannender Anlage am Antriebsriemen zu halten.

EP 0 826 906 A2 beschreibt eine Spanneinrichtung für Zugmittel, insbesondere Riemen, die eine gegenüber einem ortsfesten Maschinenteil verstellbare Schildplatte aufweist. Über einen Lagerbolzen ist eine Spannrolle drehbar zur Anlage an den Riemen vorgesehen. Zum Spannen des Riemens ist der Lagerbolzen mit einem an der Schildplatte aufgenommenen Exzenter versehen, wobei die Längsachsen des Exzenters und des Lagerbolzens um eine Exzentrität voneinander beabstandet sind, und wobei ein Verschwenken des Lagerbolzens um die Längsachse des Exzenters durch einen Anschlag begrenzt ist.

US 5,064,405 lehrt einen verstellbaren dynamischen Riemenspanner. Eine Spannrolle ist über einen Hebelelement drehbar an einem Drehlager befestigt. Eine ebenfalls über das Drehlager drehbar befestigte Adapterplatte sowie das Hebelelement weisen eine gleichartige Ausnehmung auf, welche durch die selbe Schraube durchgriffen wird. Eine Relativdrehbewegung der Adapterplatte zu dem Hebelelement ist durch elastische Elemente in einem definierten Drehmomentbereich möglich.

Die gattungsgemäße DE 20 2010 014 188 U1 lehrt eine Spannvorrichtung mit einer an einem Spannhebel angeordneten Umlenkrolle, wobei der Spannhebel derart gelagert ist, dass dieser eine rotatorische und eine translatorische Bewegung ausführt.

Aufgabe der Erfindung ist es, eine Spannvorrichtung für ein Umschlingungsmittel eines Umschlingungstriebs, insbesondere für einen Riemen eines Riementriebs an Brennkraftmaschinen, vorzuschlagen, die baulich und ferti gungstechnisch einfach herstellbar ist und die größere konstruktive Freiheitsgrade in deren Verstellung und Anordnung ermöglicht.

Die Lösung dieser Aufgabe gelingt mit den Merkmalen der unabhängigen Patentansprüche. Vorteilhafte und besonders zweckmäßige Weiterbildungen der Erfindung sind Gegenstand der Unteransprüche.

Gemäß Anspruch 1 wird eine Spannvorrichtung für ein Umschlingungsmittel mit den Merkmalen des Anspruchs 1 vorgeschlagen.

Mit einer derartigen erfindungsgemäßen Lösung ergeben sich erhebliche konstruktive Freiräume für die Verlagerung der Spannrolle und des Spannhebels, und zwar insbesondere im Hinblick auf beengte Bauraumverhältnisse und/oder angrenzende Aggregate im Bereich des Umschlingungstriebs. Der Spannhebel mit der Spannrolle wird erfindungsgemäß somit nicht, wie beim vorstehend genannten Stand der Technik vorgesehen, symmetrisch über einen Schwenkpunkt oder einen Drehpunkt verstellt, sondern kann über die Kulissenführung einen gezielten Bewegungsablauf innerhalb der Nicht-Spannposition (in der Regel als Montageposition bezeichnet) und der Spannposition durchlaufen, mittels dem die geforderte Vorspannung erzielt wird.

Die Kulissenführung weist bevorzugt wenigstens eine nutförmige Führungskulisse auf, in der wenigstens ein Führungsstift als weiterer Bestandteil der Kulissenführung zwangsgeführt ist. Ein derartiger Aufbau kann auf einfache Weise hergestellt werden und zeichnet sich durch eine hohe Funktionssicherheit aus. Bevorzugt ist in diesem Zusammenhang ein konstruktiv einfach zu bewerkstellender Aufbau, bei dem die wenigstens eine Führungskulisse am Spannhebel ausgebildet ist, wobei der wenigstens eine Führungsstift an einem dem Spannhebel zugeordneten Bauteil, insbesondere an einer Gehäusewand einer Brennkraftmaschine, ortsfest gehaltert ist. Grundsätzlich könnte in einer äquivalenten Anordnung aber auch eine kinematische Umkehrung vorgesehen sein, gemäß der die wenigstens eine Führungskulisse an einem zugeordneten Bauteil, insbesondere an einer Gehäusewand einer Brennkraftmaschine, und der wenigstens eine Führungsstift am Spannhebel angeordnet bzw. ausgebildet ist.

Für eine Lagefixierung des Spannhebels in einer gewünschten bzw. definierten Spannposition wird gemäß einer konkreten Ausgestaltung vorgeschlagen, dass der Spannhebel in der wenigstens einen Spannposition mittels wenigstens eines Befestigungsmittels lagefixiert an einem zugeordneten Bauteil, insbesondere an einer Gehäusewand einer Brennkraftmaschine, gehaltert ist. Besonders vorteilhaft ist hier eine Ausführungsform, bei der der wenigstens eine Führungsstift in einer Doppelfunktion zugleich auch das Befestigungsmittel ausbildet, zum Beispiel der wenigstens eine Führungsstift durch eine mit einer Gewindebohrung zusammenwirkende Schraube gebildet ist oder der wenigstens eine Führungsstift durch einen Schraubbolzen gebildet ist, der zusammen mit einer Schraubenmutter eine Schraubverbindung ausbildet.

An dieser Stelle sei auch ausdrücklich erwähnt, dass die Begrifflichkeit Stift bzw. Führungsstift in einem weiten und umfassenden Sinne zu verstehen ist, insbesondere nicht nur kreiszylindrische oder zylindrische Querschnittsgeometrien bezeichnen soll, sondern ausdrücklich auch jedwede andere für den Eingriff in eine Führungskulisse geeignete Querschnittsgeometrie umfassen bzw. bezeichnen soll, wie zum Beispiel rechteckförmige oder ovale Querschnittsgeometrien, um nur einige Beispiele zu nennen.

Für eine besonders zuverlässige Führung des Spannhebels bevorzugt zwei oder mehr, vorzugsweise voneinander beabstandete Führungsstifte vorgesehen werden können. Mit einer derartigen, winklige Abschnitte aufweisenden Geometrie der Führungskulisse lässt sich, zum Beispiel am Spannhebel, eine kompakte und einfache rotatorische und lineare (translatorische) Bewegungsanteile aufweisende Verlagerungsbewegung erzielen.

Besonders bevorzugt ist hier weiter eine Ausführungsform, bei der der wenigstens eine Führungsstift und die einzelnen winklig zueinander ausgerichteten Abschnitte so ausgebildet sind und so zusammenwirken, dass das Umschlingungsmittel in wenigstens einem der Abschnitte mit einer definierten Vorspannkraft in einer Spannposition gehalten ist und/oder dass die Spannrolle in wenigstens einem der Abschnitte bezüglich des Umschlingungsmittels in einer Nicht-Spannposition gehalten ist. Konkret kann die Führungskulisse hierzu einen ersten, vorzugsweise linearen, Abschnitt aufweisen, in den der wenigstens eine Führungsstift in der Spannposition eingreift, vorzugsweise zwei oder mehr Führungsstifte eingreifen, wobei die Führungskulisse weiter einen, sich an den ersten Abschnitt anschließenden zweiten, vorzugsweise linearen, Abschnitt aufweist, der gegenüber dem ersten Abschnitt in Richtung zur Spannrolle hin abgewinkelt ist, insbesondere stumpfwinklig abgewinkelt ist, und in den der wenigstens eine Führungsstift oder im Falle mehrerer Führungsstifte wenigstens einer der Führungsstifte beim Übergang von der Spannposition in die Nicht-Spannposition hineinverlagert wird, wodurch die Spannrolle in Richtung von dem Umschlingungsmittel weg verlagert ist oder wird. Die gewünschte Verlagerungsbewegung der Spannrolle kann hier somit auf besonders funktionssichere Weise vorgenommen werden. Wie bereits zuvor ausgeführt ist es für eine stabile Führung und Abstützung vorteilhaft, wenn zwei oder mehr Führungsstifte vorgesehen sind, die in der Spannposition beabstandet voneinander in den ersten Abschnitt eingreifen, insbesondere beabstandet voneinander an gegenüberliegenden Enden des ersten Abschnitts liegen.

Um sicherzustellen, dass eine zuverlässige Verlagerung des Spannhebels und damit der Spannrolle in die Nicht-Spannposition durchgeführt werden kann, wird gemäß einer weiteren bevorzugten Ausführungsform vorgeschlagen, dass sich an den zweiten Abschnitt ein dritter, mit Bezug zur Spannrolle und Führungskulisse nach innen gekrümmter Abschnitt anschließt, in den wenigstens einer der Führungsstifte beim Übergang von der Spannposition in die Nicht-Spannposition hineinverlagert wird, wodurch die Spannrolle, mit Bezug zur Verlagerungswirkung des zweiten Abschnittes noch weiter von dem Umschlingungsmittel weg verlagert ist oder wird, insbesondere in eine Ausgangs- und Montageposition verlagert ist, in welcher Ausgangs- und Montageposition die Spannrolle von dem Umschlingungsmittel abgehoben ist oder zumindest keine oder nur eine unwesentliche Spannung auf das Umschlingungsmittel ausübt.

In vorteilhafter Weiterbildung der Erfindung kann die Kulissenführung zudem so ausgebildet sein, dass der Spannhebel in einer definierten Spannposition durch den wirksamen Kraftvektor des Umschlingungsmittels in Position gehalten ist. Dies kann zum Beispiel bewerkstelligt sein, in dem in einer Führungskulisse der Kulissenführung gezielt Vertiefungen vorgesehen sind, in die der wenigstens ein Führungsstift in der definierten Spannposition einrastet. Bevorzugt wird jedoch vorgeschlagen, dass der erste Abschnitt der Führungskulisse relativ zum Kraftvektor des Umschlingungsmittels so ausgerichtet ist, dass bei sich in einer definierten Spannposition befindlichem Spannhebel eine den Spannhebel in Position haltende Kraftkomponente wirkt und/oder ausgebildet ist. Die Halteposition wird somit ohne rastierende Maßnahmen in der Kulissenführung bzw. ohne jeglichen Mehraufwand hergestellt.

Dies kann besonders vorteilhaft dadurch erzielt werden, dass der Kraftvektor des Umschlingungsmittels im Wesentlichen durch den zweiten Abschnitt der Kulissenführung verläuft, wobei deren erster Abschnitt in der definierten Spannposition des Spannhebels einen Winkel größer 90 Grad, insbesondere einen Winkel von in etwa 100 Grad, einschließt. Daraus resultiert eine an dem Spannhebel wirkende Kraftkomponente, die diesen zuverlässig in dessen gewünschter Spannposition hält.

Zur Betätigung der Spannvorrichtung können in fertigungstechnisch einfacher Weise an dem Spannhebel Mittel zum Angreifen eines Werkzeugs zur Verstellung des Spannhebels vorgesehen sein, die bevorzugt durch eine im Querschnitt unsymmetrische, insbesondere polygonförmige Ausnehmung in dem Spannhebel gebildet ist, in die ein entsprechend angepasstes Werkzeug zur Ausübung einer Stellbewegung eingreifen kann.

Wird die Ausnehmung möglichst nahe am resultierenden Bewegungszentrum des Spannhebels angeordnet, so ergeben sich daraus besonders niedrige Stellkräfte, die mittels eines einfachen, hebelartigen Werkzeugs problemlos aufbringbar sind.

Des Weiteren können auf den zuvor beschriebenen Führungsstiften drehbare Hülsen gelagert sein, die unmittelbar mit der Kulissenführung zusammenwirken und die somit eine die Stellkräfte vermindernde Wälzreibung zwischen der Kulissenführung und den Führungsstiften herstellen.

Schließlich kann der Spannhebel fertigungstechnisch besonders günstig spanlos als Gussteil, Stanzteil oder Sintermetallteil hergestellt sein. Ferner beansprucht die Erfindung ein Fahrzeug, insbesondere ein Nutzfahrzeug, mit einer erfindungsgemäßen Spannvorrichtung sowie ein Verfahren zum Spannen eines Umschlingungsmittels eines Umschlingungstriebs, insbesondere eines Riemens eines Riementriebs an Brennkraftmaschinen, mit einer erfindungsgemäßen Spannvorrichtung. Die sich dadurch ergebenden Vorteile wurden bereits zuvor ausführlich dargestellt, so dass diesbezüglich auf die vorherigen Ausführungen verwiesen wird.

Ein Ausführungsbeispiel der Erfindung ist im Folgenden mit weiteren Einzelheiten näher erläutert.

Die schematische Zeichnung zeigt in:
- Fig. 1: in raumbildlicher Darstellung einen durch zwei Riemenscheiben gebildeten Riementrieb an einer Brennkraftmaschine in Kraftfahrzeugen, mit einer Spannvorrichtung mit einem Spannhebel, einer Spannrolle und einer in dem Spannhebel vorgesehenen Führungskulisse einer Kulissenführung;
- Fig. 2: eine Draufsicht auf den teilweise dargestellten Riementrieb nach Fig. 1 mit der in Montageposition befindlichen Spannvorrichtung;
- Fig. 3: den Riementrieb nach Fig. 2 mit in einer Zwischenposition befindlicher Spannvorrichtung;
- Fig. 4: den Riementrieb nach den Fig. 2 und 3 mit in die Spannposition betätigter Spannvorrichtung; und
- Fig. 5: die Spannvorrichtung nach den Fig. 1 bis 4 in vergrößerter Darstellung und mit angezeigtem Riemenkraftvektor, der in Verbindung mit der Ausbildung der Kulissenführung eine die Spannvorrichtung in der Spannposition haltende Kraftkomponente erzeugt.

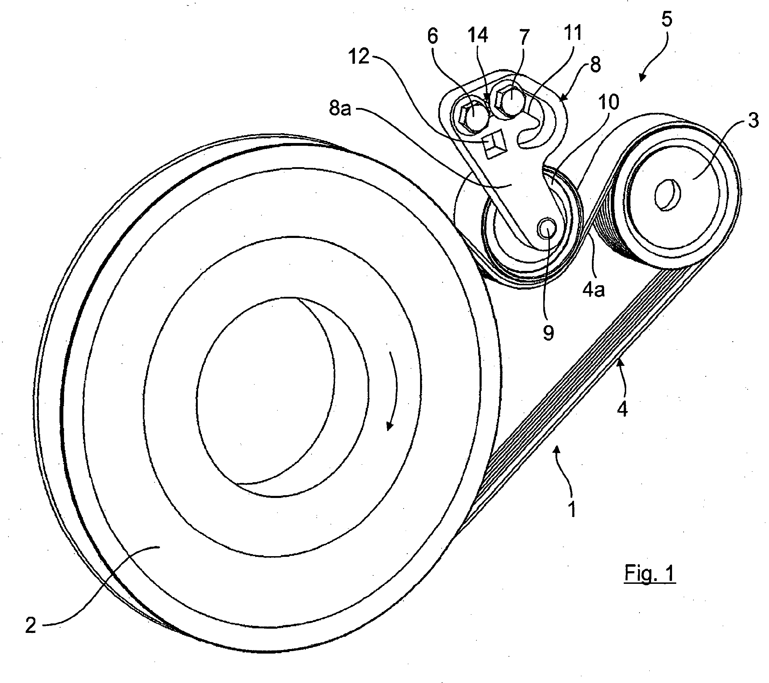

In der Fig. 1 ist stark vereinfacht ein Umschlingungstrieb bzw. ein Riementrieb 1 an einer hier nicht im Detail dargestellten Brennkraftmaschine, insbesondere für Kraftfahrzeuge, gezeigt, der sich aus einem antreibenden Riemenrad 2, einem abtreibendem Riemenrad 3 und einem hier beispielhaften, elastischen Flachriemen 4 als Umschlingungsmittel zusammensetzt.

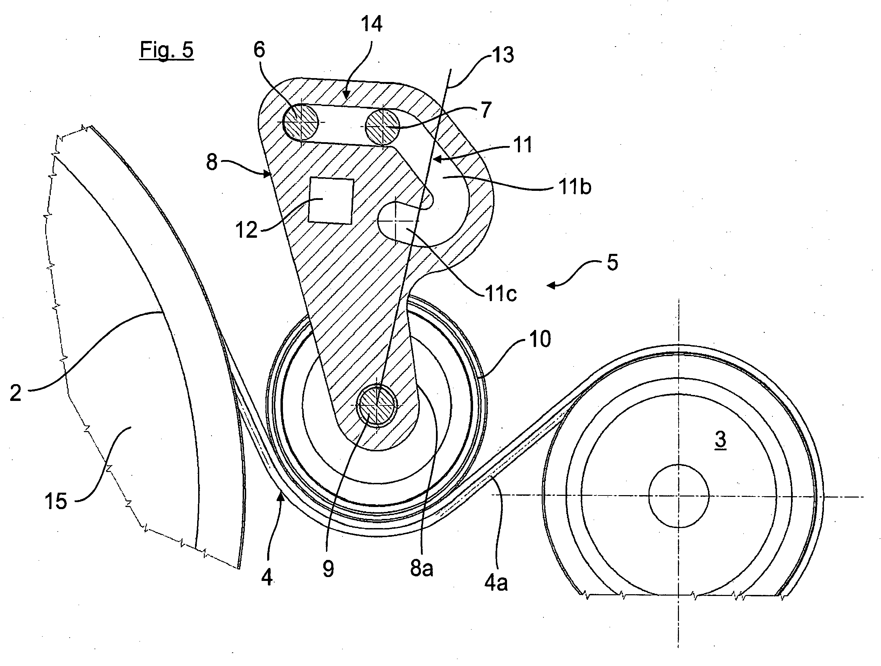

Im Bereich des Riemen-Lostrums 4a und zwischen den beiden Riemenrädern 2, 3 ist eine Spannvorrichtung 5 vorgesehen, die mittels zweier zugleich Führungsstifte bildender Befestigungsmittel bzw. Schrauben 6, 7 (die Schraubenköpfe sind nicht eingezeichnet) an einer Gehäusewand 15 der Brennkraftmaschine (schematisch in Fig. 5 dargestellt) befestigt ist.

Die Spannvorrichtung 5 weist einen Spannhebel 8 auf, an dessen in Fig. 1 nach unten ragendem Arm 8a über einen Lagerbolzen 9 eine Spannrolle 10 drehbar gelagert ist (zum Beispiel unter Zwischenschaltung eines nicht ersichtlichen Wälzlagers).

Die Spannvorrichtung 5 weist eine Kulissenführung 14 auf, die im gezeigten Ausführungsbeispiel eine spannhebelseitige Führungskulisse 11 (siehe vor allem Fig. 5) aufweist, die sich im Wesentlichen aus einem ersten linearen Abschnitt 11a und einem weiter einen, sich an den ersten linearen Abschnitt 11a anschließenden zweiten linearen Abschnitt 11 b aufweist, der gegenüber dem ersten linearen Abschnitt 11a in Richtung zur Spannrolle 10 hin stumpfwinklig abgewinkelt ist. Durch die Führungskulisse 11 hindurch sind die beiden Führungsstifte bildenden Schrauben 6, 7 mit der Gehäusewand 15 fest verbindbar sind (eingeschraubt in entsprechende Gewindebohrungen oder gebildet durch feste Gewindebolzen in Verbindung mit Schraubenmuttern).

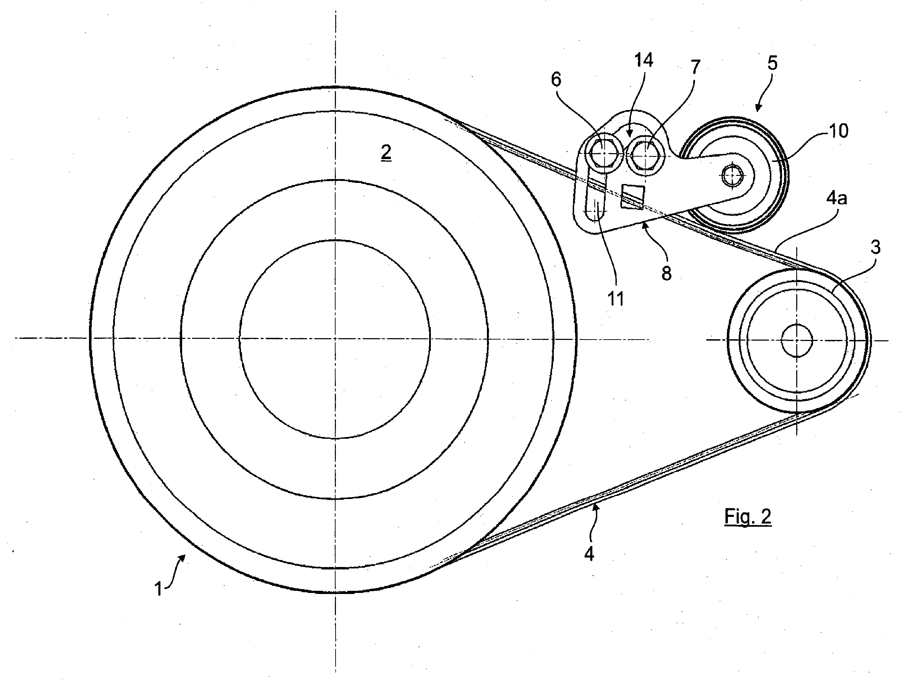

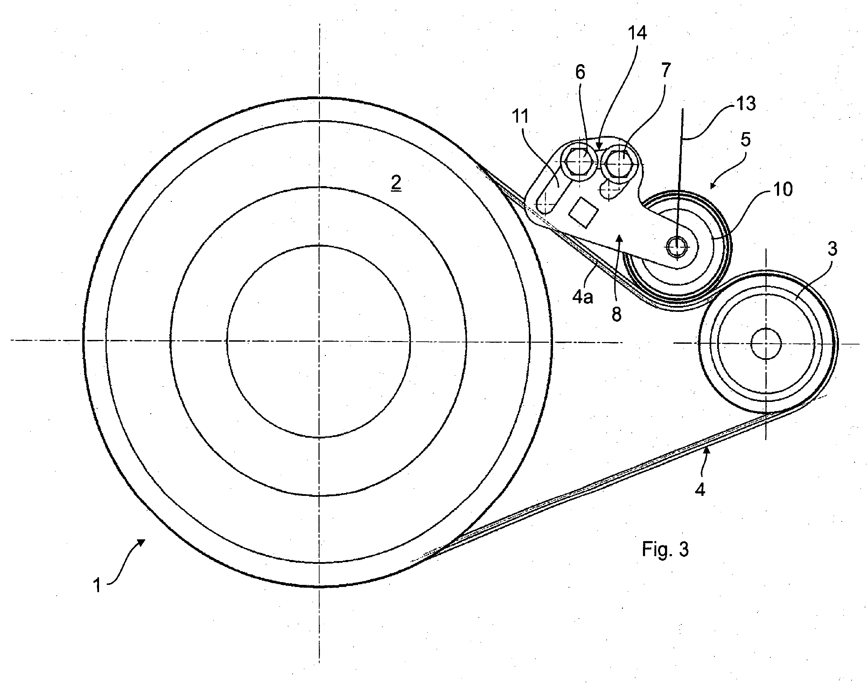

Die Länge des im Ausführungsbeispiel etwa horizontal ausgerichteten, ersten linearen Abschnitts 11a entspricht etwa dem Abstand der beiden Führungsstifte bildenden Schrauben 6, 7, wobei die Schraube 6 hier beispielhaft linksseitig in einer Anlage am Führungskulissenende anliegt bzw. anschlägt. Das Gleiche gilt im übertragenen Sinne für den zweiten linearen Abschnitt 11 b zwischen der in der Fig. 5 eingezeichneten Position der Schraube 7 und einem Bogenbereich 11 d am Ende des zweiten linearen Abschnitts 11 b. An diesen zweiten Abschnitt 11 b schließt sich ein dritter, mit Bezug zur Spannrolle 10 und Führungskulisse 11 nach innen gekrümmter Abschnitt 11c an, in den die Schraube 7 beim Übergang von der Spannposition in die Nicht-Spannposition so hineinverlagert wird, dass sie am Endabschnitt 11 d anliegt, während sich die Schraube 6 in etwa im Bogenbereich 11 d befindet. Dadurch wird die Spannrolle 10, mit Bezug zur Verlagerungswirkung des zweiten Abschnittes 11 b (Zwischenstellung der Fig. 3) noch weiter von dem Flachriemen 4 weg verlagert, wie dies in der Fig. 2 gezeigt ist, die eine Ausgangs- und Montageposition zeigt, in der die Spannrolle 10 von dem Flachriemen 4 abgehoben ist oder zumindest keine oder nur eine unwesentliche Spannung auf den Flachriemen 4 ausübt.

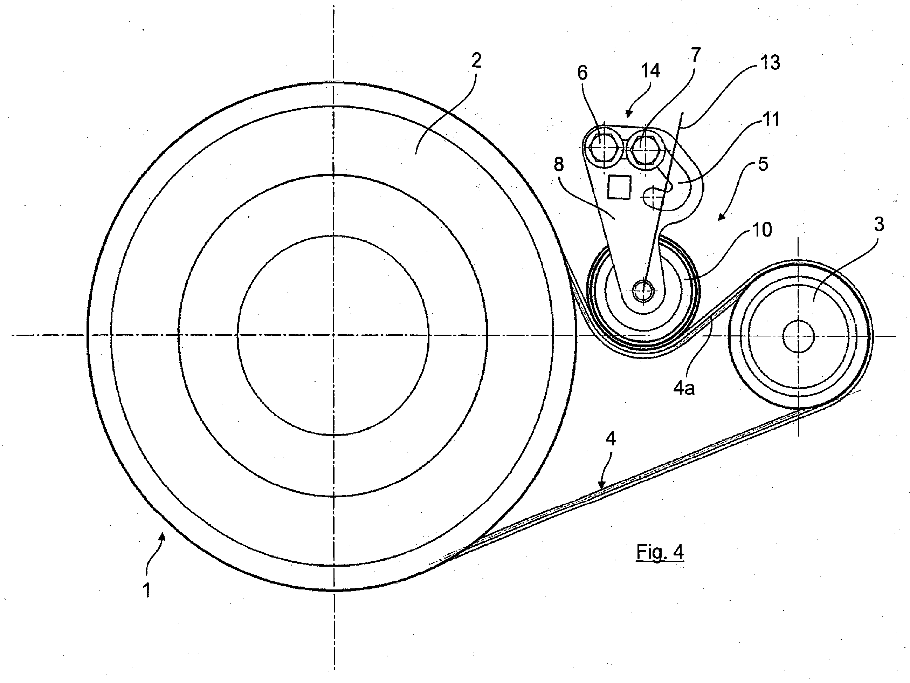

Wie in den Fig. 2 bis 4 dargestellt, wird somit der Spannhebel 8 und damit die Spannrolle 10 mittels der Kulissenführung 14 von einer Ausgangs- und Montageposition (Fig. 2) mit nicht gespanntem Flachriemen 4 zunächst in eine Zwischenstellung (Fig. 3) und schließlich in die gewünschte Spannposition (Fig. 4 und 5) bewegt, wobei der Spannrolle 10 im Verlaufe dieser Verlagerung des Spannhebels 8 zwischen der Nicht-Spannposition und der Spannposition (selbstverständlich auch umgekehrt bei einer Verlagerung des Spannhebels 8 zwischen der Spannposition und der Nicht-Spannposition) eine rotatorische und lineare Bewegungsanteile aufweisende Verlagerungsbewegung aufgeprägt wird.

Zum einfachen Durchführen des Spannvorgangs ist in dem Spannhebel 8 nahe dem durch die Führungskulisse 11 und die Führungsstifte bzw. Schrauben 6, 7 bewirkten Bewegungszentrum eine unsymmetrische Ausnehmung, im Ausführungsbeispiel eine Vierkant-Ausnehmung 12 vorgesehen, in die ein hebelförmiges Werkzeug (nicht dargestellt) einsteckbar ist.

Mittels des Werkzeugs kann die Spannplatte 8 mit der Spannrolle 10 wie in den Fig. 2 bis 4 dargestellt verschwenkt werden, wobei sie eine durch lineare und rotatorische Bewegungsanteile gezielt vorgegebene Verstellung erfährt.

Die Fig. 5 zeigt ferner den in der Spannposition des Spannhebels 8 mit der Spannrolle 10 sich ergebenden Kraftvektor 13, der sich aus der Winkelhalbierenden der im Lostrum 4a des Flachriemens 4 sich einstellenden Riemenauflaufwinkel an den Riemenrädern 2, 3 und an der Spannrolle 10 ergibt.

Der erste lineare Abschnitt 11a der Führungskulisse 11 ist dabei zum sich aus der Riemenvorspannung ergebenden Kraftvektor 13 so ausgerichtet, dass in der Spannposition (Fig. 2 und 5) des Spannhebels 8 eine resultierende Kraftkomponente entsteht, die den Spannhebel 8 gegen das Ende (bzw. gegen die Schraube 6) des linearen Abschnitts 11a der Führungskulisse 11 vorspannt bzw. den Spannhebel 8 mit der Spannrolle 10 in der gezeigten Spannposition hält. In dieser Position kann der Spannhebel 8 durch Befestigen der Schrauben 6, 7 dauerhaft festgelegt werden.

Der Winkel α zwischen dem durch den zweiten linearen Abschnitt 11 b der Führungskulisse 11 verlaufenden Kraftvektor 13 und dem ersten linearen Abschnitt 11a sollte dabei größer sein als 90 Grad, zum Beispiel wie im Ausführungsbeispiel 100 Grad betragen.

Um die über das Werkzeug aufzubringenden Stellkräfte an dem Spannhebel 8 weiter zu vermindern, können auf die Schrauben 6, 7 Hülsen (nicht dargestellt) lose aufgesteckt sein, die an die Führungskulisse 11 angepasst sind und die sich bei der Verstellung relativ zu den Schrauben 6, 7 verdrehen können bzw. eine Wälzreibung innerhalb der Führungskulisse 11 ermöglichen. Die Hülsen sollten bevorzugt bündig mit dem Spannhebel 8 ausgeführt sein.

Der Spannhebel 8 ist bevorzugt als Stanzteil, Gussteil oder als Sintermetallteil gefertigt, wobei die Führungskulisse 11 und die Ausnehmung 12 bereits spanlos eingearbeitet sein können. Als bevorzugte Werkstoffe können Leichtmetall, Stahl, Sintermetall oder ein plastischer Kunststoff verwendet sein, um nur einige geeignete Werkstoffe beispielhaft zu benennen.

Anstelle der dargestellten, einzigen Führungskulisse 11 könnte die Kulissenführung 14 gegebenenfalls auch mit zwei oder mehr Führungskulissen aufweisen, mit denen eine rotatorische und lineare (translatorische) Bewegungsanteile aufweisende Verstellung des Spannhebels 8 erfolgen kann. Der Spannhebel 8 kann bei einer derartigen Ausgestaltung so ausgebildet sein, dass über den Riemenkraftvektor 13 eine den Spannhebel 8 in der über Anschläge (Führungsstifte 6, 7) fest vorgegebenen Spannposition haltende Kraftkomponente gebildet ist.

Die Führungskulisse 11 könnte des Weiteren zusätzlich oder abweichend vom Ausführungsbeispiel mit Vertiefungen versehen sein, in die in der Spannposition einer oder beide Führungsstifte bzw. Schrauben 6, 7 einrasten können, um eine fest vorgegebene Spannposition herzustellen.

Gegebenenfalls könnten ferner die Führungsstifte und die Schrauben 6, 7 separate Bauteile sein, so dass die Schrauben 6, 7 außerhalb der Kulissenführung 14 bzw. der Führungskulisse 11 nur als reines Befestigungsmittel dienen, während die Führungsstifte 6, 7 wie vorbeschrieben mit der Führungskulisse 11 zusammenwirken.

Schließlich könnte am Nichteingriffsende 11d der Kulissenführung 11 eine Aufweitung vorgesehen sein, die ein Durchführen des korrespondierenden Schraubenkopfes der Schraube 7 ermöglichen könnte (Montagerleichterung).

Gegebenenfalls könnte auch unmittelbar der Lagerbolzen 9 für die Spannrolle 10 bereits als Führungsstift dienen, der mit einer in die Gehäusewand der Brennkraftmaschine eingearbeiteten Kulissenführung wie beschrieben zusammenwirkt.

### Bezugszeichenliste

1 Riementrieb
2 Riemenrad
3 Riemenrad
4 Flachriemen
4a Lostrum
5 Spannvorrichtung
6 Schraube
7 Schraube
8 Spannhebel
8a Arm
9 Lagerbolzen
10 Spannrolle
11 Führungskulisse
11a erster Abschnitt
11 b zweiter Abschnitt
11 c dritter Abschnitt
11d Ende
12 Ausnehmung
13 Kraftvektor
14 Kulissenführung
15 Gehäusewand

## Patentansprüche

1. Spannvorrichtung für ein Umschlingungsmittel eines Umschlingungstriebs, insbesondere für einen Riemen eines Riementriebs an Brennkraftmaschinen, mit einem Spannhebel (8), der wenigstens eine drehbar gelagerte Spannrolle (10) trägt und beim Spannvorgang von einer Nicht-Spannposition in wenigstens eine Spannposition verstellbar, insbesondere verschwenkbar ist, in der die Spannrolle (10) mit einer definierten Spannkraft auf das Umschlingungsmittel (4) einwirkt, wobei die Spannvorrichtung (5) eine Kulissenführung (14) aufweist, die der Spannrolle (10) bei einer Verlagerung des Spannhebels (8) zwischen der Nicht-Spannposition und der wenigstens einen Spannposition eine definierte Verlagerungsbewegung aufprägt, wobei die Kulissenführung (14) so ausgebildet ist, dass diese der Spannrolle (10) bei einer Verlagerung des Spannhebels (8) zwischen der Nicht-Spannposition und der wenigstens einen Spannposition eine rotatorische und lineare Bewegungsanteile aufweisende Verlagerungsbewegung aufprägt wobei die Kulissenführung (14) wenigstens eine Führungskulisse (11) aufweist, in der wenigstens ein Führungsstift (6, 7) als weiterer Bestandteil der Kulissenführung (14) zwangsgeführt ist **dadurch gekennzeichnet, dass** die Führungskulisse (11) mehrere, winklig zueinander ausgerichtete Abschnitte (11a, 11 b, 11 c) aufweist, in denen der wenigstens eine Führungsstift (6, 7) geführt ist.

2. Spannvorrichtung nach einem der vorhergehenden Ansprüche, **dadurch gekennzeichnet, dass** der Spannhebel (8) in der wenigstens einen Spannposition mittels wenigstens eines Befestigungsmittels lagefixiert an einem zugeordneten Bauteil, insbesondere an einer Gehäusewand einer Brennkraftmaschine, gehaltert ist.

3. Spannvorrichtung nach Anspruch 2, **dadurch gekennzeichnet, dass** der wenigstens eine Führungsstift (6, 7) zugleich das Befestigungsmittel ausbildet.

4. Spannvorrichtung nach einem der vorhergehenden Ansprüche, **dadurch gekennzeichnet, dass** die wenigstens eine Führungskulisse (11) am Spannhebel (8) ausgebildet ist, und dass der wenigstens eine Führungsstift (6, 7) an einem dem Spannhebel (8) zugeordneten Bauteil, insbesondere an einer Gehäusewand einer Brennkraftmaschine, ortsfest gehaltert ist.

5. Spannvorrichtung nach einem der vorhergehenden Ansprüche, **dadurch gekennzeichnet, dass** in der Führungskulisse (11) zwei oder mehr Führungsstifte (6, 7) geführt sind.

6. Spannvorrichtung nach einem der vorhergehenden Ansprüche, **dadurch gekennzeichnet, dass** der wenigstens eine Führungsstift (6, 7) und die einzelnen winklig zueinander ausgerichteten Abschnitte (11a, 11b, 11c) so ausgebildet sind und zusammenwirken, dass das Umschlingungsmittel (4) in wenigstens einem der Abschnitte (11a) mit einer definierten Vorspannkraft in einer Spannposition gehalten ist und/oder dass die Spannrolle (10) in wenigstens einem der Abschnitte (11 b, 11 c) bezüglich des Umschlingungsmittels (4) in einer Nicht-Spannposition gehalten ist.

7. Spannvorrichtung nach einem der vorhergehenden Ansprüche, **dadurch gekennzeichnet,**
**dass** die Führungskulisse (11) einen ersten, vorzugsweise linearen,
Abschnitt (11a) aufweist, in den der wenigstens eine Führungsstift (6, 7) in der Spannposition eingreift, vorzugsweise zwei oder mehr Führungsstifte (6, 7) eingreifen, und dass die Führungskulisse (11) weiter einen, sich an den ersten Abschnitt (11a) anschließenden zweiten, vorzugsweise linearen, Abschnitt (11 b) aufweist, der gegenüber dem ersten Abschnitt (11a) in Richtung zur Spannrolle (10) hin abgewinkelt ist, insbesondere stumpfwinklig abgewinkelt ist, und in den der wenigstens eine Führungsstift (6, 7) oder im Falle mehrerer Führungsstifte (6, 7) wenigstens einer der Führungsstifte (6, 7) beim Übergang von der Spannposition in die Nicht-Spannposition hineinverlagert wird, wodurch die Spannrolle (10) in Richtung von dem Umschlingungsmittel (4) weg verlagert ist oder wird.

8. Spannvorrichtung nach Anspruch 7, **dadurch gekennzeichnet, dass** zwei oder mehr Führungsstifte (6, 7) vorgesehen sind, die in der Spannposition beabstandet voneinander in den ersten Abschnitt (11a) eingreifen, insbesondere beabstandet voneinander an gegenüberliegenden Enden des ersten Abschnitts (11a) liegen.

9. Spannvorrichtung nach einem der vorhergehenden Ansprüche, **dadurch gekennzeichnet, dass** die Kulissenführung (14) so ausgebildet ist, dass der Spannhebel (8) in einer definierten Spannposition durch den wirksamen Kraftvektor (13) des Umschlingungsmittels (4) in Position gehalten ist.

10. Spannvorrichtung nach Anspruch 7 oder 8 und Anspruch 9, **dadurch gekennzeichnet, dass** der erste Abschnitt (11a) der Führungskulisse (11) relativ zum Kraftvektor (13) des Umschlingungsmittels (4) so ausgerichtet ist, dass bei sich in einer definierten Spannposition befindlichem Spannhebel (8) eine den Spannhebel (8) in Position haltende Kraftkomponente wirkt und/oder ausgebildet ist.

11. Spannvorrichtung nach Anspruch 10, **dadurch gekennzeichnet, dass** der Kraftvektor (13) des Umschlingungsmittels (4) im Wesentlichen durch den zweiten Abschnitt (11b) der Kulissenführung (11) verläuft und dass deren erster Abschnitt (11a) in der definierten Spannposition des Spannhebels (8) einen Winkel größer 90 Grad, insbesondere einen Winkel von in etwa 100 Grad, einschließt.

12. Spannvorrichtung nach einem der Ansprüche 7 bis 11, **dadurch gekennzeichnet, dass** sich an den zweiten Abschnitt (11 b) ein dritter, mit Bezug zur Spannrolle (10) und Führungskulisse (11) nach innen gekrümmter Abschnitt (11 c) anschließt, in den wenigstens einer der Führungsstifte (6, 7) beim Übergang von der Spannposition in die Nicht-Spannposition hineinverlagert wird, wodurch die Spannrolle (10), mit Bezug zur Verlagerungswirkung des zweiten Abschnittes (11b) noch weiter von dem Umschlingungsmittel (4) weg verlagert ist oder wird, insbesondere in eine Ausgangs- und Montageposition verlagert ist, in welcher Ausgangs- und Montageposition die Spannrolle (10) von dem Umschlingungsmittel (4) abgehoben ist oder zumindest keine oder nur eine unwesentliche Spannung auf das Umschlingungsmittel (4) ausübt.

13. Spannvorrichtung nach einem der vorhergehenden Ansprüche, **dadurch gekennzeichnet, dass** an dem Spannhebel (8) Mittel (12) zum Angreifen eines Werkzeugs zur Verlagerung des Spannhebels (8) vorgesehen sind, wobei bevorzugt vorgesehen ist, dass die Mittel durch eine im Querschnitt unsymmetrische, bevorzugt polygonförmige, Ausnehmung (12) in dem Spannhebel (8) gebildet ist, in die ein entsprechend angepasstes Werkzeug zur Ausübung einer Stellbewegung eingreifen kann.

14. Fahrzeug, insbesondere Nutzfahrzeug, mit einer Spannvorrichtung (5) nach einem der vorhergehenden Ansprüche.

15. Verfahren zum Spannen eines Umschlingungsmittels eines Umschlingungstriebs, insbesondere eines Riemens eines Riementriebs an Brennkraftmaschinen, mit einer Spannvorrichtung nach einem der Ansprüche 1 bis 13.

## Claims

1. A tensioning apparatus for a wrap-around means of a wrap-around drive, in particular for a belt of a belt drive in internal combustion engines, having a tensioning lever (8) which carries at least one rotatably mounted tensioning roller (10) and, during the tensioning operation, can be adjusted, in particular can be pivoted, from a non-tensioning position into at least one tensioning position, in which the tensioning roller (10) acts on the wrap-around means (4) with a defined tensioning force, wherein the tensioning apparatus (5) has a slotted guide (14) which imparts a defined displacement movement to the tensioning roller (10) during a displacement of the tensioning lever (8) between the non-tensioning position and the at least one tensioning position, wherein the slotted guide (14) is configured in such a way that it imparts a displacement movement which has rotational and linear movement components to the tensioning roller (10) during a displacement of the tensioning lever (8) between the non-tensioning position and the at least one tensioning position, wherein the slotted guide (14) has at least one guide slot (11), in which at least one guide pin (6, 7) is guided positively as a further constituent part of the slotted guide (14), **characterized in that** the guide slot (11) has a plurality of sections (11a, 11b, 11c) which are oriented at an angle with respect to one another and in which the at least one guide pin (6, 7) is guided.

2. The tensioning apparatus according to one of the preceding claims, **characterized in that** the tensioning lever (8) is secured in the at least one tensioning position by means of at least one fastening means in a positionally fixed manner on an associated component, in particular on a housing wall of an internal combustion engine.

3. The tensioning apparatus according to Claim 2, **characterized in that** the at least one guide pin (6, 7) at the same time forms the fastening means.

4. The tensioning apparatus according to one of the preceding claims, **characterized in that** the at least one guide slot (11) is formed on the tensioning lever (8), and **in that** the at least one guide pin (6, 7) is secured in a stationary manner on a component which is assigned to the tensioning lever (8), in particular on a housing wall of an internal combustion engine.

5. The tensioning apparatus according to one of the preceding claims, **characterized in that** two or more guide pins (6, 7) are guided in the guide slot (11).

6. The tensioning apparatus according to one of the preceding claims, **characterized in that** the at least one guide pin (6, 7) and the individual sections (11a, 11b, 11c) which are oriented at an angle with respect to one another are configured and interact in such a way that the wrap-around means (4) is held with a defined pre-tensioning force in a tensioning position in at least one of the sections (11a) and/or that the tensioning roller (10) is held in a non-tensioning position with regard to the wrap-around means (4) in at least one of the sections (11b, 11c).

7. The tensioning apparatus according to one of the preceding claims, **characterized in that** the guide slot (11) has a first, preferably linear section (11a), into which the at least one guide pin (6, 7) engages in the tensioning position, preferably two or more guide pins (6, 7) engage, and **in that**, furthermore, the guide slot (11) has a second, preferably linear section (11b) which adjoins the first section (11a), is angled away with respect to the first section (11a) in the direction of the tensioning roller (10), in particular is angled away at an obtuse angle, and into which the at least one guide pin (6, 7) or, in the case of a plurality of guide pins (6, 7), at least one of the guide pins (6, 7) is displaced during the transition from the tensioning position into the non-tensioning position, as a result of which the tensioning roller (10) is displaced in the direction away from the wrap-around means (4).

8. The tensioning apparatus according to Claim 7, **characterized in that** two or more guide pins (6, 7) are provided which, in the tensioning position, engage into the first section (11a) such that they are spaced apart from one another, in particular lie at opposite ends of the first section (11a) such that they are spaced apart from one another.

9. The tensioning apparatus according to one of the preceding claims, **characterized in that** the slotted guide (14) is configured in such a way that the tensioning lever (8) is held in position in a defined tensioning position by the active force vector (13) of the wrap-around means (4).

10. The tensioning apparatus according to Claim 7 or 8 and Claim 9, **characterized in that** the first section (11a) of the guide slot (11) is oriented relative to the force vector (13) of the wrap-around means (4) in such a way that, when the tensioning lever (8) is situated in a defined tensioning position, a force component acts and/or is formed which holds the tensioning lever (8) in position.

11. The tensioning apparatus according to Claim 10, **characterized in that** the force vector (13) of the wrap-around means (4) runs substantially through the second section (11b) of the slotted guide (11), and **in that**, in the defined tensioning position of the tensioning lever (8), the first section (11a) of the said slotted guide (11) encloses an angle of greater than 90 degrees, in particular an angle of approximately 100 degrees.

12. The tensioning apparatus according to one of Claims 7 to 11, **characterized in that** a third section (11c) which is curved inwardly in relation to the tensioning roller (10) and the guide slot (11) adjoins the second section (11b), into which third section (11c) at least one of the guide pins (6, 7) is displaced during the transition from the tensioning position into the non-tensioning position, as a result of which the tensioning roller (10) is displaced, in relation to the displacement action of the second section (11b), further away from the wrap-around means (4), in particular is displaced into an initial and mounting position, in which initial and mounting position the tensioning roller (10) is raised up from the wrap-around means (4) or at least exerts no or only an insubstantial tension on the wrap-around means (4).

13. The tensioning apparatus according to one of the preceding claims, **characterized in that** means (12) are provided on the tensioning lever (8) for being acted upon by a tool in order to displace the tensioning lever (8), it preferably being provided that the means is formed by a recess (12) in the tensioning lever (8), which recess (12) has an asymmetrical cross section, is preferably polygonal, and into which a correspondingly adapted tool can engage in order to exert an actuating movement.

14. A vehicle, in particular a commercial vehicle, having a tensioning apparatus (5) according to one of the preceding claims.

15. A method for tensioning a wrap-around means of a wrap-around drive, in particular a belt of a belt drive in internal combustion engines, having a tensioning apparatus according to one of Claims 1 to 13.

## Revendications

1. Dispositif de serrage pour un moyen de cerclage d'une commande de cerclage, en particulier pour une courroie d'un entraînement à courroie sur des moteurs à combustion interne, avec un levier de serrage (8), qui porte au moins un galet de serrage (10) monté de façon rotative et qui peut être déplacé, en particulier qui peut pivoter, lors d'une opération de serrage d'une position de non serrage à au moins une position de serrage, dans laquelle le galet de serrage (10) agit avec une force de serrage définie sur le moyen de cerclage (4), dans lequel le dispositif de serrage (5) présente un guide à coulisse (14), qui imprime au galet de serrage (10) un mouvement de déplacement défini lors d'un déplacement du levier de serrage (8) entre la position de non serrage et ladite au moins une position de serrage, dans lequel le guide à coulisse (14) est configuré de telle manière que celui-ci imprime au galet de serrage (10), lors d'un déplacement du levier de serrage (8) entre la position de non serrage et ladite au moins une position de serrage, un mouvement de déplacement présentant des parties de mouvement de rotation et de translation, dans lequel le guide à coulisse (14) présente au moins une coulisse de guidage (11), dans laquelle au moins une tige de guidage (6, 7) en tant qu'autre composant du guide à coulisse (14) est guidée de façon forcée, **caractérisé en ce que** la coulisse de guidage (11) présente plusieurs sections (11a, 11b, 11c) orientées angulairement l'une par rapport à l'autre, dans lesquelles ladite au moins une tige de guidage (6, 7) est guidée.

2. Dispositif de serrage selon la revendication précédente, **caractérisé en ce que** le levier de serrage (8), étant fixé en position dans ladite au moins une position de serrage au moyen d'au moins un moyen de fixation, est appuyé sur un composant associé, en particulier sur une paroi de carter d'un moteur à combustion interne.

3. Dispositif de serrage selon la revendication 2, **caractérisé en ce que** ladite au moins une tige de guidage (6, 7) forme en même temps le moyen de fixation.

4. Dispositif de serrage selon l'une quelconque des revendications précédentes, **caractérisé en ce que** ladite au moins une coulisse de guidage (11) est formée sur le levier de serrage (8), et **en ce que** ladite au moins une tige de guidage (6, 7) est montée de façon stationnaire sur un composant associé au levier de serrage (8), en particulier sur une paroi de carter d'un moteur à combustion interne.

5. Dispositif de serrage selon l'une quelconque des revendications précédentes, **caractérisé en ce que** deux ou plusieurs tiges de guidage (6, 7) sont guidées dans la coulisse de guidage (11).

6. Dispositif de serrage selon l'une quelconque des revendications précédentes, **caractérisé en ce que** ladite au moins une tige de guidage (6, 7) et les sections individuelles orientées angulairement l'une par rapport à l'autre (11a, 11b, 11c) sont configurées et coopèrent de telle manière que le moyen de cerclage (4) soit maintenu dans une position de serrage avec une force de précontrainte définie dans au moins une des sections (11a) et/ou que le galet de serrage (10) soit maintenu dans une position de non serrage par rapport au moyen de cerclage (4) dans au moins une des sections (11b, 11c).

7. Dispositif de serrage selon l'une quelconque des revendications précédentes, **caractérisé en ce que** la coulisse de guidage (11) présente une première section (11a), de préférence linéaire, dans laquelle ladite au moins une tige de guidage (6, 7) s'engage dans la position de serrage, de préférence deux ou plusieurs tiges de guidage (6, 7) s'engagent, et **en ce que** la coulisse de guidage (11) présente en outre une deuxième section (11b), de préférence linéaire, se raccordant à la première section (11a), qui est coudée en direction du galet de serrage (10) par rapport à la première section (11a), en particulier est coudée en angle obtus, et à l'intérieur de laquelle ladite au moins une tige de guidage (6, 7) ou dans le cas de plusieurs tiges de guidage (6, 7) au moins une des tiges de guidage (6, 7) est déplacée lors du passage de la position de serrage à la position de non serrage, le galet de serrage (10) étant ainsi écarté ou s'écartant ainsi du moyen de cerclage (4).

8. Dispositif de serrage selon la revendication 7, **caractérisé en ce qu'**il est prévu deux ou plusieurs tiges de guidage (6, 7), qui s'engagent dans la première section (11a) à distance l'une de l'autre dans la position de serrage, en particulier sont situées à distance l'une de l'autre à des extrémités opposées de la première section (11a).

9. Dispositif de serrage selon l'une quelconque des revendications précédentes, **caractérisé en ce que** le guide à coulisse (14) est configuré de telle manière que le levier de serrage (8) soit maintenu en position, dans une position de serrage définie, par le vecteur de force efficace (13) du moyen de cerclage (4).

10. Dispositif de serrage selon la revendication 7 ou 8 et la revendication 9, **caractérisé en ce que** la première section (11a) de la coulisse de guidage (11) est orientée par rapport au vecteur de force (13) du moyen de cerclage (4), de telle manière que, lorsque le levier de serrage (8) se trouve dans une position de serrage définie, une composante de la force maintenant le levier de serrage (8) en position agisse et/ou soit formée.

11. Dispositif de serrage selon la revendication 10, **caractérisé en ce que** le vecteur de force (13) du moyen de cerclage (4) passe essentiellement à travers la deuxième section (11b) de la coulisse de guidage (11) et **en ce que** la première section (11a) de celle-ci forme, dans la position de serrage définie du levier de serrage (8), un angle supérieur à 90 degrés, en particulier un angle d'environ 100 degrés.

12. Dispositif de serrage selon l'une quelconque des revendications 7 à 11, **caractérisé en ce qu'**à la deuxième section (11b) se raccorde une troisième section (11c), incurvée vers l'intérieur par rapport au galet de serrage (10) et à la coulisse de guidage (11), à l'intérieur de laquelle au moins une des tiges de guidage (6, 7) est déplacée lors du passage de la position de serrage à la position de non serrage, le galet de serrage (10) étant ainsi écarté ou s'écartant ainsi encore davantage du moyen de cerclage (4), par rapport à l'action de déplacement de la deuxième section (11b), étant de préférence déplacé dans une position de départ ou une position de montage, position de départ ou position de montage dans laquelle le galet de serrage (10) est soulevé du moyen de cerclage (4) ou au moins n'exerce aucune contrainte ou seulement une contrainte négligeable sur le moyen de cerclage (4).

13. Dispositif de serrage selon l'une quelconque des revendications précédentes, **caractérisé en ce qu'**il est prévu sur le levier de serrage (8) des moyens (12) destinés à l'application d'un outil pour le déplacement du levier de serrage (8), dans lequel il est de préférence prévu que les moyens soient formés par un évidement (12) dans le levier de serrage (8), avec une section transversale asymétrique, de préférence polygonale, dans lequel peut s'engager un outil adapté en conséquence pour l'exercice d'un mouvement de réglage.

14. Véhicule, en particulier véhicule utilitaire, avec un dispositif de serrage (5) selon l'une quelconque des revendications précédentes.

15. Procédé de serrage d'un moyen de cerclage d'une commande de cerclage, en particulier d'une courroie d'un entraînement à courroie sur des moteurs à combustion interne, avec un dispositif de serrage selon l'une quelconque des revendications 1 à 13.
